# NEUE EUROPÄISCHE PATENTSCHRIFT

(11) **EP 0 155 239 B2**
(45) Veröffentlichungstag und Bekanntmachung des Hinweises auf die Entscheidung über den Einspruch: **02.08.1995**
(45) Hinweis auf die Patenterteilung: 17.06.1992
(21) Anmeldenummer: 85810106.6
(22) Anmeldetag: 11.03.1985
(51) Int. Cl.: C09B 67/42, D06P 1/00, B01J 2/28, F26B 25/22, B01J 2/00, D06P 3/76

(54) **Verfahren zur Herstellung von Farbstoffgranulaten**
Process for the manufacture of dyestuff granulates
Procédé de fabrication de granules de colorant

(30) Priorität: 15.03.1984 CH 1289/84
(43) Veröffentlichungstag der Anmeldung: 18.09.1985
(73) Patentinhaber: CIBA-GEIGY AG, 4002 Basel (CH)
(72) Erfinder: Schneider, Dieter, D-7889 Grenzach-Wyhlen (DE); Knies, Heinz, D-7889 Grenzach-Wyhlen 1 (DE); Kaudela, Gerhard, D-7851 Fischingen (DE)

(56) Entgegenhaltungen:
- EP-A- 0 024 654
- EP-A- 0 024 655
- CH-A- 663 622
- DE-A- 1 619 375
- DE-A- 2 322 308
- DE-A- 2 442 423
- DE-A- 2 529 564
- DE-A- 2 529 569
- DE-A- 2 816 306
- GB-A- 952 855
- GB-A- 2 135 690

## Beschreibung

Die vorliegende Erfindung betrifft ein Verfahren zur Herstellung von Farbstoffgranulaten, die nach dem Verfahren hergestellten Granulate, sowie deren Verwendung zur Bereitung von Färbebädern, Klotzflotten oder Druckpasten zum Färben bzw. Bedrucken von Textilmaterial.

Granulate weisen gegenüber pulverförmigen Handelsformen eine Reihe von Vorteilen auf. So sind diese insbesondere staubarm bis staubfrei, haben ein hohes Schüttgewicht und bilden während der Lagerung keine Klumpen, sondern sind auch noch nach Jahren rieselfähig. Aufgrund dieser Vorteile haben Granulierverfahren inzwischen auch im Bereich der Farbstofformulierung eine breite Anwendung gefunden. Wichtige Granulierverfahren sind z.B. die Sprüh- und Aufbaugranulierung oder auch die Schmelzgranulierung. Besonders die Schmelzgranulierung ist einfach in der Durchführung und benötigt keine aufwendigen Apparaturen.

Charakteristisch für die Schmelzgranulierung ist, dass der zu granulierende Farbstoff in der Hitze in einem geschmolzenen Trägermaterial, dem sogenannten Schmelzträger, suspendiert oder gelöst wird und die Schmelze vor, während oder nach dem Erstarren einer Formgebung unterworfen wird. Als Schmelzträger werden allgemein gut wasserlösliche organische Verbindungen mit einem Schmelzpunkt von ca. 40° bis 200° C verwendet; so z.B. Harnstoff (DE-OS 16 19 375, DE-OS 2 322 308) Harnstoffderivate, Sulfone, Lactame, Zucker oder Polyalkohole usw. (DE-OS 2 529 564) oder auch Aethylenoxid-Addukte oder Polyäthylenglykole (DE-OS 2 529 569).

In der zuletzt genannten Offenlegungsschrift ist u.a. die Schmelzgranulierung von kationischen Farbstoffen unter Verwendung von Polyäthylenglykol als Schmelzträger beschrieben. Das aus diesem Stand der Technik bekannte Verfahren geht jedoch grundsätzlich von trockenem Farbstoffpulver aus, d.h. dass der Farbstoff nach der Synthese aus wässriger Lösung oder Suspension isoliert und getrocknet werden muss. Diese Art der Aufarbeitung ist jedoch sehr arbeitsaufwendig und mit einem hohen Energieverbrauch verbunden. Hinzu kommt, dass Farbstoffe während des Trocknens häufig verklumpen und anschliessend gemahlen werden müssen. Schliesslich lassen sich gerade kationische Farbstoffe zum Teil nicht in fester Form isolieren, sondern fallen als wasserhaltiges Oel an. Ein analoger Sachverhalt ist auch aus der GB-A-2 135 690 bekannt.

Es wurde nun ein neues kostensenkendes und qualitätsverbesserndes Verfahren gefunden, das überraschenderweise auch die Granulierung von Farbstoffen mit einem mehr oder weniger hohen Wassergehalt unter Verwendung von Polyäthylenglykol als Schmelzträger erlaubt, wobei selbst bei hohem Wassergehalt des Farbsfoffs nur ein Teil des Wassers entfernt werden muss, da die so hergestellten Granulate bis zu 30 Gew.-% Wasser enthalten können und dennoch sehr gute Gebrauchseigenschaffen aufweisen.

Gegenstand vorliegender Erfindung ist somit ein Verfahren zur Herstellung von Farbstoffgranulaten durch Schmelzgranulierung unter Verwendung von Polyäthylenglykol als Schmelzträger, das dadurch gekennzeichnet ist, dass man Farbstoffe mit einem Wassergehalt von mindestens 20 Gew. -% in Form des wasserfeuchten Presskuchens, der Syntheselösung oder -suspension oder Syntheseschmelze oder einem wasserhaltigen Farbstofföl einsetzt und durch partielles Verdampfen des Wassers aus der Farbstoff-Polyäthylenglykolschmelze den Feuchtigkeitsgehalt der Granulate auf einen Wert von 1 bis 30 Gew.-% einstellt.

Als Farbstoffe, worunter auch optische Aufheller zu verstehen sind, kommen in erster Linie wasserlösliche Farbstoffe z.B. saure Farbstoffe, wie Nitro-, Aminoketon-, Ketonimin-, Methin-, Nitrodiphenylamin-, Chinolin-, Aminonaphthochinon- oder Cumarinfarbstoffe in Frage und insbesondere Anthrachinon- und Azofarbstoffe, wie Monoazo- und Disazofarbstoffe.

Diese Farbstoffe enthalten mindestens eine anionische wasserlöslichmachende Gruppe, wie z.B. eine Carbonsäure- oder insbesondere eine Sulfonsäuregruppe, und liegen im allgemeinen in ihrer Salzform vor, wie z.B. als Lithium-, Natrium-, Kalium- oder Ammoniumsalz.

Insbesondere eignet sich das vorliegende Verfahren zur Granulierung wasserlöslicher kationischer Farbstoffe, bzw. optischer Aufheller, welche den verschiedensten chemischen Klassen angehören können.

Es handelt sich um Salze, beispielsweise Chloride, Sulfate, Methosulfate oder Oniumchloride oder Metallhalogenid- beispielsweise Tetrachlorozinkat-Salze von Azofarbstoffen, wie Monoazo-, Disazo- und Polyazofarbstoffe; ferner um Anthrachinonfarbstoffe, Phthalocyaninfarbstoffe, um Diarylmethan- und Triarylmethanfarbstoffe, um Methin-, Polymethin- und Azomethinfarbstoffe, um Thiazol-, Ketonimin-, Acridin-, Cyanin-, Nitro-, Chinolin-, Benzimidazol-, Xanthen-, Azin-, Oxazin-, Thiazin- und Triazenfarbstoffe, welche im Molekül mindestens ein quaternäres Stickstoffatom enthalten.

Grundsätzlich können nach vorliegendem Verfahren aber auch wasserunlösliche oder in Wasser schwer lösliche Farbstoffe granuliert werden, z.B. Dispersionsfarbstoffe, Küpenfarbstoffe, Schwefelfarbstoffe oder Metallkomplexfarbstoffe.

Eingesetzt werden Farbstoffe mit einem Wassergehalt von 20 Gew.-% und mehr, in Form des wasserfeuchten Presskuchens, der Syntheselösung oder -suspension, der Syntheseschmelze oder als wasserhaltiges Oel. Da durch Erhitzen der Polyäthylenglykolschmelze nach Zugabe des Farbstoffs auf Temperaturen von über 100° C (bzw. bei 50 bis 100° C unter Vakuum) überschüssiges Wasser problemlos abdestilliert werden kann, lassen sich selbst noch verdünnte wässrige Lösungen mit einem Farbstoffgehalt von ca. 10 Gew.-% verarbeiten. Im allgemeinen liegt der Wassergehalt der Farbstoffe bei 20 bis 90 Gew.-%; zweckmässiger Weise wird man jedoch von Farbstoffen ausgehen, die nicht mehr als 50 Gew.-%₀ Wasser enthalten. Insbesondere werden solche Farbstoffe nach vorliegendem Verfahren verarbeitet, die einen Wassergehalt von 20 bis 50 Gew.-% aufweisen.

Durch den Wassergehalt lässt sich zudem die Viskosität der Polyäfhylenglykol/Farbsfoff-Schmelze steuern. Je mehr Wasser in der Schmelze ist, um so dünnflüssiger ist diese. Angestrebt wird eine Viskosität der Schmelze, gemessen bei 80° C, von 100 bis 5.000 mPa·s. Eine Schmelze mit einer derartigen Konsistenz lässt sich ohne Schwierigkeiten zertropfen, oder mit Hilfe eines rotierenden perforierten Metallzylinders pastillieren.

Das als Schmelzträger verwendete Polyäthylenglykol hat ein Molgewicht von vorzugsweise 1.000 bis 40.000, insbesondere 1.500 bis 20.000. Derartige Polyäthylenglykole schmelzen im Bereich von 40 bis 60 °C. Es versteht sich von selbst, dass bei temperaturempfindlichen Farbstoffen der Schmelzpunkt des verwendeten Polyäthylenglykols unterhalb der Zersetzungstemperatur des zu granulierenden Farbstoffs liegen muss.

Ein wesentliches Merkmal des vorliegenden Verfahrens ist, dass bereits mit relativ wenig Polyäthylenglykol stabile Granulate erhalten werden. Besonders bei niedrig schmelzenden kationischen Farbstoffen kommt man zum Teil mit weniger als 20 Gew.-% Polyäthylenglykol aus, bezogen auf Farbstoff. Vorteilhaft verwendet man auf 1 Teil Farbstoff 0,1 bis 2 Teile, insbesondere 0,2 bis 1,5 Teile Polyäthylenglykol.

Der Polyäthylenglykol/Farbstoff-Schmelze können auch noch übliche Hilfsmittel zugesetzt werden. In Frage kommen z.B. solche die die Wasserlöslichkeit, die Lösungsgeschwindigkeit und die Stabilität der Granulate verbessern, wie Lactame und Amide, beispielsweise ε-Caprolactam, Nicotinsäureamid und Methacrylsäureamid; oder solche, die zur Einstellung des optimalen pH-Wertes der Farbstoffschmelze dienen, wie z.B. bei Zimmertemperatur feste organische Säuren, wie p-Toluolsulfonsäure, Maleinsäure und Monochloressigsäure; oder solche, die der Verbesserung der festen Form des Granulates dienen, wie hochdisperse Siliziumdioxide, Aluminiumoxide oder Mischoxide; oder auch die üblichen Coupagemittel, wie z.B. Glaubersalz oder Ligninsulfonat, um die Farbstärke der gebrauchsfertigen Granulate auf einen vorgegebenen Wert einzustellen.

Ferner sind je nach Farbstoff auch Zusätze vorteilhaft, um eine homogene Polyäthylenglykol/Farbstoff-Schmelze herzustellen. Hier bewähren sich insbesondere Aethylenglykol und Dextrin als Lösungsvermittler; während sich z.B. Glycerin als wirksam erweist, wenn es darum geht, beim Abdestillieren des Wassers einer Phasentrennung entgegenzuwirken.

Wie bereits eingangs erwähnt, kann der Feuchtigkeitsgehalt der Granulate bis zu 30 Gew.-% betragen, ohne dass diese sich feucht anfühlen oder beim Lagern zusammenbacken. Je nach Farbstoff liegt die Restfeuchte der Granulate üblicherweise bei 5 bis 25 Gew.-%.

Unter dem Begriff Granulat sollen im vorliegenden neben kugel- und tropfenförmigen Gebilden, auch Pastillen und Plätzchen, ferner schuppen- oder stäbchenförmige Festkörper verstanden werden, je nachdem, in welcher Form die Polyäthylenglykol/Farbstoff-Schmelze zum Erstarren gebracht wird. Natürlich kann die, beispielsweise auf einem Kühlblech ausgegossene Schmelze, auch nach dem Erstarren auf eine bestimmte Granulatform hin mechanisch zerkleinert werden. Eine weitere Möglichkeit der Granulierung besteht darin, die Polyäthylenglykol/Farbstoff-Schmelze in einem Kühlturm zu versprühen (sog. Prillen).

Durchgeführt wird das vorliegende Granulierverfahren beispielsweise folgendermassen: Polyäthylenglykol mit einem Molgewicht von ca. 20.000 wird aufgeschmolzen und in der Schmelze,bei einer Temperatur von 100 bis 150° C, anschliessend die entsprechende Menge an Farbstoffpresskuchen gelöst (Wassergehalt ca. 30 bis 50 Gew.-%). Durch intensives Rühren wird die Schmelze homogenisiert und ein Teil des Wassers wird abgedampft. Zur Erzeugung von Granulaten in Pastillenform wird die Schmelze dann durch einen perforierten rotierenden Zylinder gedrückt und auf ein Kühlband getropft. Am Ende des Kühlbandes werden die fertigen Granulate in einem bereitstehenden Behälter aufgefangen. Ein entsprechender Granulierapparat ist unter der Bezeichung ROTAFORM-PASTILLIERER (Marke der Firma Sandvik) auf dem Markt.

Die nach dem erfindungsgemässen Verfahren hergestellten Farbstoffgranulate weisen bevorzugt die folgende Zusammensetzung auf: 30 bis 90 Gew.-% mindestens eines Farbstoffs, bevorzugt eines kationischen Farbstoffes, und gegebenenfalls 1 bis 20 Gew.-% eines oder mehrerer Hilfsmittel, gelöst oder suspendiert in einer Schmelze aus 10 bis 60 Gew.-% Polyäthylenglykol mit einem Molgewicht von 1.000 bis 40.000 insbesondere 1.500 bis 20.000 und einem Schmelzpunkt von 45 bis 55° C. Der Feuchtigkeitsgehalt der Granulate beträgt 1 bis 30 Gew.-%.

Die Granulate zeichnen sich aus durch permanente Staubfreiheit und gute Rieselfähigkeit: sie sind ferner nicht hygroskopisch, gut löslich in heissem Wasser (man erhält echte Lösungen), lagerstabil (über 12 Monate unverändert haltbar) und haben ein hohes Schüttgewicht von ca. 0,7 kg/l, was eine gesteigerte Lager- und Transportkapazität ergibt.

Die Farbstoffgranulate finden Verwendung zur Herstellung von Färbebädern, Klotzflotten oder Druckpasten zum Färben und Bedrucken von Textilmaterial aus natürlichen und/oder synthetischen Fasern, insbesondere aus Polyamid.

Die folgenden Beispiele dienen der Erläuterung der Erfindung: Teile bedeuten Gewichtsteile und Prozente Gewichtsprozente.

Beispiel 1: 286 Teile Polyäthylenglykol (MG 20.000) werden durch Erwärmen auf eine Temperatur von 120° C geschmolzen. Anschliessend werden in die heisse Schmelze 714 Teile Farbstoff der Formel 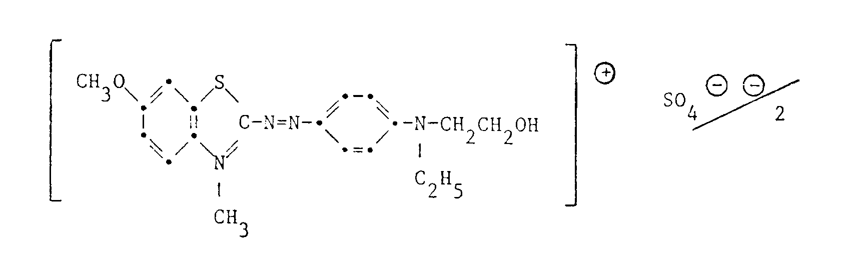
als Presskuchen mit einem Wassergehalt von 30 % eingetragen. Man reguliert die Temperatur der Schmelze auf einen Wert von 80 bis 90°C ein, homogenisiert und trägt die Schmelze mittels eines Pastilliergeräts auf ein Kühlband auf. Am Ende des Kühlbands, das eine Temperatur von ca. 15°C aufweist, werden die erstarrten Pastillen abgenommen. Man erhält 1 000 Teile Farbstoffpastillen mit einem Durchmesser von 5 bis 6 mm und einer Restfeuchte von ca. 20 %. Die Pastillen sind staubfrei und rieselfähig und lösen sich in heissem Wasser rasch auf.

Ein Granulat mit gleich guten Gebrauchseigenschaften wird erhalten, wenn man die Schmelze in einem Kühlturm versprüht.

Beispiel 2: 836 Teile Farbstoff der Formel 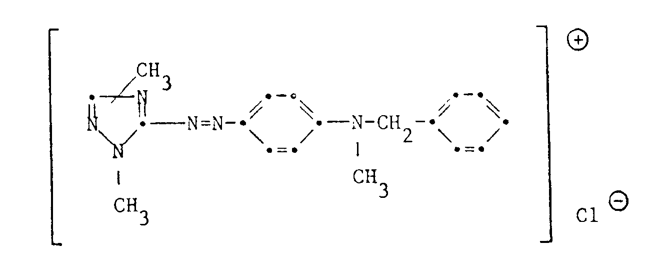
als 80%-iges Farbstofföl (Rest Wasser) werden vorgelegt und auf 75°C erhitzt. In das heisse Farbstofföl werden sodann 147 Teile Polyäthylenglykol (MG 5.000 bis 6.000) eingetragen und aufgeschmolzen. Um das Auftreten einer Phasentrennung zu verhindern, werden 17 Teile Glycerin zugegeben. Dann wird ein Teil des Wassers abdestilliert (gegebenenfalls unter einem leichten Vakuum) und anschliessend die homogene Schmelze, wie im Beispiel 1 beschrieben, pastilliert. Man erhält staubfreie Farbstoffpastillen mit einer Restfeuchte von ca. 5 %.

Beispiel 3: 600 Teile Polyäthylenglykol (MG 5.000 bis 6.000) werden auf 100°C erhitzt und aufgeschmolzen. In die vorgelegte Polyäthylenglykolschmelze trägt man anschliessend 400 Teile Dispersionsfarbstoff der Formel 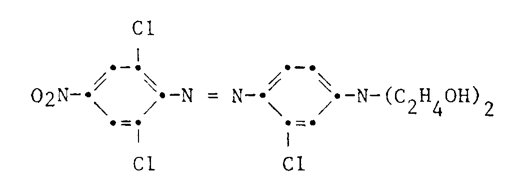
als feuchten Presskuchen mit einem Wassergehalt von 40 % ein. Die Temperatur wird auf 95°C eingestellt, die Schmelze wird homogenisiert und das Wasser bei dieser Temperatur weitgehend abdestilliert.

Anschliessend bringt man die Schmelze mittels eines Pastilliergerätes oder als dünne Schicht auf ein Kühlband auf und lässt sie erstarren. Am Ende des Kühlbandes werden die Pastillen oder die dünnen segmentierten Pellets mit einer Temperatur von 30° C abgenommen.

Man erhält 1000 Teile Farbstoffpastillen oder Pellets mit einer Restfeuchte von 1 bis 3 %. Die so erhaltenen Pastillen oder Pellets sind staubfrei, rieselfähig und lösen sich in heissem Wasser rasch auf. Man erhält eine feinteilige, von Farbstoffagglomeraten freie Farbstoffdispersion.

Beispiel 4: (Färbebeispiel) In einem Färbeapparat werden ca. 100 Teile Wasser, 3,1 Teile Glaubersalz und 1,2 Teile Essigsäure (60 %ig) vorgelegt und auf 80° C erhitzt. Dann wird die Flottenzirkulation eingeschaltet und es werden 0,77 Teile der gemäss Beispiel 1 hergestellten Farbstoffpastillen zugegeben, die sich rasch und rückstandsfrei in der heissen Flotte lösen. Anschliessend lässt man noch 1180 Teile Wasser zulaufen (Flottenverhältnis 1:8) und bringt 160 Teile Polyacrylnitril-Fasermaterial als Kammzug in den Färbeapparat ein. Dann erwärmt man die Flotte unter ständiger Zirkulation innerhalb von 45 Minuten auf 105° C und färbt 20 Minuten bei dieser Temperatur. Danach kühlt man die Flotte ab, entnimmt dem Färbeapparat das gefärbte Fasermaterial, das anschliessend gespült und getrocknet wird. Man erhält eine kräftige blaue Färbung mit guter Nassechtheit.

## Patentansprüche

1. Verfahren zur Herstellung von Farbstoffgranulaten durch Schmelzgranulierung unter Verwendung von Polyäthylenglykol als Schmelzträger, dadurch gekennzeichnet, dass man Farbstoffe mit einem Wassergehalt von mindestens 20 Gew.-%, in Form des wasser-feuchten Presskuchens, der Syntheselösung oder -suspension oder Syntheseschmelze oder eines wasserhaltigen Farbstofföls, einsetzt und durch partielles Verdampfen des Wassers aus der Farbstoff-Polyäthylenglykolschmelze den Feuchtigkeitsgehalt der Granulate auf einen Wert von 1 bis 30 Gew.-% einstellt.

2. Verfahren gemäss Anspruch 1, dadurch gekennzeichnet, dass man Farbstoffe mit einem Wassergehalt von 30 bis 50 Gew.-% einsetzt.

3. Verfahren gemäss Anspruch 1, dadurch gekennzeichnet, dass man auf 1 Teil Farbstoff 0,1 bis 2 Teile Polyäthylenglykol verwendet.

4. Verfahren gemäss Anspruch 1, dadurch gekennzeichnet, dass man auf 1 Teil Farbstoff 0,2 bis 1,5 Teile Polyäthylenglykol verwendet.

5. Verfahren gemäss Anspruch 1, dadurch gekennzeichnet, dass man Polyäthylenglykol mit einem Molgewicht von 1.000 bis 40.000 verwendet.

6. Verfahren gemäss Anspruch 1, dadurch gekennzeichnet, dass man Polyäthylenglykol mit einem Molgewicht von 1.500 bis 20.000 verwendet.

7. Die nach dem Verfahren gemäss Anspruch 1 erhaltenen Farbstoffgranulate.

8. Verwendung der gemäss Anspruch 1 erhaltenen Farbstoffgranulate zur Herstellung von Färbebädern, Klotzflotten oder Druckpasten zum Färben oder Bedrucken von Textilmaterial aus natürlichen und/oder synthetischen Fasern, insbesondere Polyamid.

## Claims

1. A process for the preparation of dye granules by melt granulation, using polyethylene glycol as melt vehicle, which comprises using a dye having a water content of at least 20% by weight, in the form of the water-moist filter cake, of the synthesis solution or suspension or of the synthesis melt or a water-containing dye oil, and adjusting the moisture content of the granules to 1 to 30% by weight by partial evaporation of the water from the dye/polyethylene glycol melt.

2. A process according to claim 1, wherein the dye employed has a water content of 30 to 50 % by weight.

3. A process according to claim 1, wherein 0.1 to 2 parts of polyethylene glycol are used per part of dye.

4. A process according to claim 1, wherein 0.2 to 1.5 parts of polyethylene glycol are used per part of dye.

5. A process according to claim 1, which comprises using a polyethylene glycol having a molecular weight of 1000 to 40,000.

6. A process according to claim 1, which comprises using a polyethylene glycol having a molecular weight of 1500 to 20,000.

7. The dye granules obtained by a process as claimed in claim 1.

8. The use of dye granules obtained as claimed in claim 1 for the preparation of dyebaths, padding liquors or printing pastes for dyeing or printing textile material made from natural and/or synthetic fibres, especially polyamide.

## Revendications

1. Procédé de fabrication de granules de colorant par granulation à l'état fondu, à l'aide de polyéthylèneglycol utilisé comme véhicule fondu, caractérisé en ce que l'on utilise des colorants contenant au moins 20 % d'eau, sous la forme de tourteau humide, de solution ou de suspension de synthèse, de masse fondue de synthèse, ou encore d'une huile de colorant contenant de l'eau, et en ce que l'on ajuste, en extrayant par évaporation une partie de l'eau de la masse fondue de polyéthylèneglycol et de colorant, le taux d'humidité résiduelle du granulat à une valeur de 1 à 30 % en poids.

2. Procédé conforme à la revendication 1, caractérisé en ce que l'on effectue la granulation de colorants présentant une teneur en eau de 30 à 50 % en poids.

3. Procédé conforme à la revendication 1, caractérisé en ce que l'on utilise, pour 1 partie de colorant, de 0,1 à 2 parties de polyéthylèneglycol.

4. Procédé conforme à la revendication 1, caractérisé en ce que l'on utilise, pour 1 partie de colorant, de 0,2 à 1,5 parties de polyéthylèneglycol.

5. Procédé conforme à la revendication 1, caractérisé en ce que l'on utilise du polyéthylèneglycol présentant une masse molaire de 1 000 à 40 000.

6. Procédé conforme à la revendication 1, caractérisé en ce que l'on utilise du polyéthylèneglycol présentant une masse molaire de 1 500 à 20 000.

7. Granules de colorant obtenus selon le procédé de la revendication 1.

8. Utilisation des granules de colorant obtenus selon la revendication 1 pour la préparation de bains de teinture, de bains de foulardage ou de pâtes d'impression, destinés à la teinture ou à l'impression de matériaux textiles en fibres naturelles et/ou synthétiques, et en particulier, en polyamide.
